# EUROPEAN PATENT APPLICATION

(11) **EP 4 763 320 A1**
(43) Date of publication of application: **24.06.2026**
(21) Application number: 25222237.7
(22) Date of filing: 10.12.2025
(51) Int. Cl.: B01F 23/53, B01F 23/50, B01F 27/723, B01F 27/724, B01F 31/80, B01F 31/86, B01F 33/82, B01F 35/213, B01F 35/22, B01F 35/221

(54) **ULTRASONIC DISPERSION DEVICE AND SLURRY EXTRUSION APPARATUS INCLUDING THE SAME**

(30) Priority: 18.12.2024 KR 20240190401
(71) Applicant: SAMSUNG SDI CO., LTD., Yongin-si, Gyeonggi-do 17084 (KR)
(72) Inventor: AHN, Hyejin, 17084 Yongin-si (KR); JANG, Kyeongho, 17084 Yongin-si (KR); MOON, Jeunggi, 17084 Yongin-si (KR); CHO, Chaewoong, 17084 Yongin-si (KR)
(74) Representative: Marks & Clerk LLP

(57) **Abstract**

ULTRASONIC DISPERSION DEVICE AND SLURRY EXTRUSION APPARATUS INCLUDING THE SAME

An ultrasonic dispersion device in a slurry extrusion apparatus (100) includes ultrasonic probes (200) in an outlet (14) of the slurry extrusion apparatus, the ultrasonic probes being configured to irradiate a slurry in the slurry extrusion apparatus with ultrasonic waves, and a controller configured to control the ultrasonic waves of the ultrasonic probes.

## Description

### BACKGROUND

### 1. Field

The present disclosure relates to an ultrasonic dispersion device and a slurry extrusion apparatus including the same, and more particularly, to an ultrasonic dispersion device for irradiating an in-extruder slurry with ultrasonic waves, and a slurry extrusion apparatus including the same.

### 2. Description of the Related Art

Unlike primary batteries that are not designed to be (re)charged, secondary batteries are designed to be discharged and recharged. Low-capacity secondary batteries may be used in small portable electronic devices, such as smart phones, feature phones, notebook computers, digital cameras, and camcorders, while large-capacity secondary batteries may be used as power sources for driving motors, such as of hybrid vehicles or electric vehicles, and for power storage.

A method for manufacturing such secondary batteries may include applying an electrode slurry (which is composed of an electrode active material, a conductive material, a binder, and a solvent for dissolving the binder) to a current collector and drying it. The electrode slurry may be produced by physically and uniformly dispersing and mixing liquid-powder mixture materials including an electrode active material, a conductive material, a binder, a solvent, etc., in order to produce a slurry mixture having fluidity and viscosity suitable for application while having material properties that are usable as battery electrodes.

A slurry mixing device, called a slurry mixer, may be used to mix the above mixture materials to produce the slurry mixture. For example, a twin-screw extruder may be used as the slurry mixer. The twin-screw extruder may be suitable for mixing of solid slurries or mixing for the purpose of high productivity, compared to other slurry mixers, since it may apply a strong and fast shear force to mixture materials.

The above information disclosed in this Background section is for enhancement of understanding of the background of the present disclosure, and therefore, it may contain information that does not constitute related (or prior) art.

### SUMMARY

In accordance with an aspect of the present disclosure, there is provided an ultrasonic dispersion device that is provided in a slurry extrusion apparatus. The ultrasonic dispersion device includes multiple ultrasonic probes configured to irradiate a slurry, introduced into the slurry extrusion apparatus, with ultrasonic waves, and a control unit configured to control ultrasonic irradiation of the ultrasonic probes, wherein the ultrasonic probes are placed at an upper or parallel outlet of the slurry extrusion apparatus.

In accordance with another aspect of the present disclosure, there is provided an ultrasonic dispersion device in a slurry extrusion apparatus, the ultrasonic dispersion device comprising: ultrasonic probes in an outlet of the slurry extrusion apparatus, the ultrasonic probes being configured to irradiate a slurry in the slurry extrusion apparatus with ultrasonic waves; and a controller configured to control the ultrasonic waves of the ultrasonic probes.

The (multiple) ultrasonic probes may be arranged in a zigzag pattern at regular intervals (of distance along a path of movement of the slurry) on the (or a) side of the outlet (along a path of movement of the slurry), and may be arranged at regular intervals (of distance) or angles on the (or a) front of the outlet.

The (multiple) ultrasonic probes may include a first ultrasonic probe provided on a wall of the outlet and a second ultrasonic probe provided on a column of the outlet.

The ultrasonic probes may include first ultrasonic probes on the side of the outlet and second ultrasonic probes on a column of the outlet, the column extending through a center of the outlet.

The first and second ultrasonic probes may be arranged in a zigzag pattern at regular intervals (of distance along a path of movement of the slurry) on the side of the outlet (along a path of movement of the slurry) so as not to overlap each other, and may be arranged in a zigzag pattern at regular intervals (of distance) or angles on the (or a) front of the outlet so as not to overlap each other.

The ultrasonic dispersion device may further include a drive unit (or driver) configured to rotate the outlet wall (or side of the outlet) and the outlet column (or column of the outlet), and the control unit may control (or be configured to control) the drive unit (or driver) to rotate at least one of the outlet wall (or side of the outlet) and the outlet column (or column of the outlet).

The ultrasonic dispersion device may further include a sensor (unit) configured to measure slurry status information including at least one of a temperature, a pressure, a density, a viscosity, a homogeneity, a flow rate, and a flow velocity of the slurry, and the control unit (or controller) may (be configured to) use the slurry status information to set at least one of whether or not to rotate the outlet wall (or outlet or side of the outlet) and the outlet column (or column of the outlet), a direction of rotation thereof, and a speed of rotation thereof.

The ultrasonic dispersion device may further include a sensor unit (or sensor) configured to measure slurry status information including at least one of a temperature, a pressure, a density, a viscosity, a homogeneity, a flow rate, and a flow velocity of the slurry, and the control unit (or controller) may (be configured to) use the slurry status information to set an irradiation condition including at least one of a time, an interval, and an intensity of ultrasonic irradiation of the ultrasonic probes.

The ultrasonic probes may be ceramic probes.

The ultrasonic dispersion device may further include a coolant supply unit configured to supply cooling water to the ultrasonic probes.

The ultrasonic dispersion device may have a center positioned in a straight line with a center of a screw in the slurry extrusion apparatus.

In accordance with another aspect of the present disclosure, there is provided a slurry extrusion apparatus, comprising an inlet configured to introduce a slurry material therethrough; a barrel connected to the inlet, the slurry material being configured to move through the barrel; at least one screw in the barrel, the screw being configured to rotate and to apply a mechanical shear force to the slurry material in the barrel; an outlet connected to the barrel, the outlet being an upper outlet or a parallel outlet, and the outlet being configured to extrude the slurry material from the barrel; and an ultrasonic dispersion device in the outlet, the ultrasonic dispersion device being in accordance with the aspects of the present disclosure discussed above.

In accordance with another aspect of the present disclosure, there is provided a slurry extrusion apparatus, comprising: an inlet for introducing a slurry material therethrough; a barrel, which is a region where a slurry moves; at least one screw configured to apply a mechanical shear force to the slurry by rotation thereof; an outlet for extruding the slurry therethrough; and an ultrasonic dispersion device according to an aspect of the present disclosure discussed above wherein the ultrasonic probes are placed at the outlet.

At least some of the above and other features of the invention are set out in the claims.

### BRIEF DESCRIPTION OF THE DRAWINGS

Features will become apparent to those of skill in the art by describing in detail example embodiments with reference to the attached drawings, in which:
FIG. 1 is a view illustrating a slurry extrusion apparatus according to an embodiment of the present disclosure;
FIG. 2 is a view illustrating a slurry extrusion apparatus according to another embodiment of the present disclosure;
FIGS. 3A and 3B are diagrams for explaining a slurry dispersion method using ultrasonic waves according to an embodiment of the present disclosure;
FIG. 4 is a block diagram illustrating an ultrasonic dispersion device according to an embodiment of the present disclosure;
FIGS. 5A and 5B are views illustrating an ultrasonic dispersion device according to an embodiment of the present disclosure;
FIGS. 6A and 6B are views illustrating an ultrasonic dispersion device according to another embodiment of the present disclosure;
FIGS. 7A and 7B are views illustrating an ultrasonic dispersion device according to still another embodiment of the present disclosure; and
FIG. 8 is a flowchart illustrating a method of driving slurry extrusion apparatuses according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

It will be further understood that the terms "comprises," "includes," "comprising," and/or "including" when used herein, specify the presence of stated features, integers, steps, operations, elements, components, and/or groups thereof, but do not preclude the presence or addition of one or more other features, integers, steps, operations, elements, components, and/or groups thereof.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of example embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of example embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

A comparative slurry extrusion apparatus may include an inlet, a barrel, twin screws, and an outlet. The inlet is an inlet for introducing slurry materials therethrough, the barrel is a region where the slurry materials move, the twin screws include (e.g., consist of) two screws to mix, shear, and knead the slurry materials by applying a mechanical shear force to the slurry materials by rotation of the screws, and the outlet is an outlet for extruding and discharging the slurry materials, which are mixed, sheared, and kneaded by the twin screws, therethrough. The twin screws in the comparative slurry extrusion apparatus may have different types and arrangements, which determine the physical properties and dispersibility of the produced slurries.

For example, in the comparative slurry extrusion apparatus, the twin screws may be arranged in a kneading, back-kneading, or backward manner, and the role of slurry movement, melting, and pumping may be determined depending on the arrangement and type of each screw. Such twin screws may be suitable for mixing of solid slurries or mixing for the purpose of high productivity, compared to other slurry mixers, since it may apply a strong and fast shear force to the slurry material.

However, the slurry quality control in such an apparatus may be limited due to a very short residence time of the slurries in the apparatus. While an additional process of dispersing and homogenizing slurries, after discharge thereof, may be added, the additional process may dilute the advantage of continuous processes in the apparatus.

In contrast, a slurry extrusion apparatus 100 according to the present disclosure may be configured to control the physical properties, dispersibility, and homogeneity of slurries by utilizing the vibration energy and dynamic functions from cavitation bubbles generated when an aqueous solution is irradiated with ultrasonic waves. For this purpose, the slurry extrusion apparatus 100 of the present disclosure may be configured to have a multi-ultrasonic dispersion zone therein.

The slurry extrusion apparatus 100 of the present disclosure may be configured to control the physical properties, dispersibility, and homogeneity of slurries by repeatedly exposing the slurries to ultrasonic waves, which are regular and strong stimuli, within a short period of time in the multi-ultrasonic dispersion zone.

The slurry extrusion apparatus 100 of the present disclosure may mix slurries by means of ultrasonic waves to allow for uniform mixing and homogenization of the slurries compared to existing mechanical slurry mixers, and may also be used in a degassing process to maintain slurries in an even phase for a long period of time.

The slurry extrusion apparatus 100 of the present disclosure may control the particle sizes and distribution of slurries by maximizing slurry cavitation through ultrasonic waves, thereby ensuring the physical properties of the slurries optimized for processes after discharge thereof.

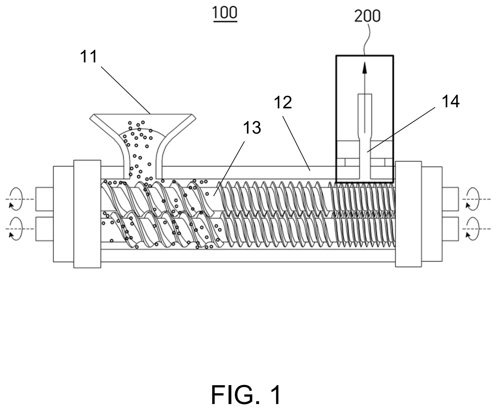

FIG. 1 is a view illustrating the slurry extrusion apparatus 100 according to an embodiment of the present disclosure.

Referring to FIG. 1, the slurry extrusion apparatus 100 according to an embodiment of the present disclosure may include an inlet 11, a barrel 12, twin screws 13, an outlet 14, and an ultrasonic dispersion device 200 configured to form a multi-ultrasonic dispersion zone. For example, as illustrated in FIG. 1, the inlet 11 may be an inlet for introducing a slurry material into the barrel 12, and the outlet 14 may be an outlet for extruding and/or discharging the slurry material from the barrel 12 (e.g., the inlet 11 and outlet 14 may be at opposite ends of the barrel 12). For example, as illustrated in FIG. 1, the twin screws 13 may extend in parallel to each other inside the barrel 12 and along a lengthwise direction of the barrel 12 to mix, shear, and knead the slurry material introduced into the barrel 12 (e.g., the twin screws 13 may be parallel to a longitudinal sidewall of the barrel 12).

The ultrasonic dispersion device 200 may be at (e.g., inside) the outlet 14. The ultrasonic dispersion device 200 may include a probe at the outlet 14 that is configured to irradiate a slurry with ultrasonic waves, and may control the probe to irradiate the slurry with ultrasonic waves.

In detail, the ultrasonic dispersion device 200 may generate cavitation bubbles in the slurry by irradiating the slurry with ultrasonic waves. The ultrasonic dispersion device 200 may be configured to control the physical properties, dispersibility, and homogeneity of the slurry by utilizing the vibration energy and dynamic functions resulting from the cavitation bubbles.

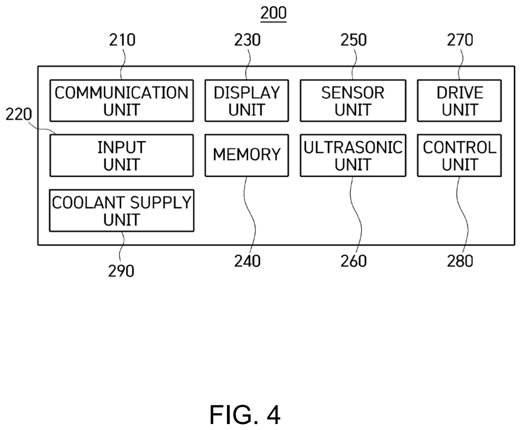

The ultrasonic dispersion device 200 may be provided at (e.g., positioned inside) the outlet 14 of the slurry extrusion apparatus 100. The ultrasonic dispersion device 200 may be fixed to the outlet 14 as one component in the slurry extrusion apparatus 100, or may be detachably attached to the outlet 14 of the slurry extrusion apparatus 100 as a separate device. The configuration and function of the ultrasonic dispersion device 200 will be described in detail with reference to FIG. 4 and other drawings.

For example, referring to FIG. 1, the ultrasonic dispersion device 200 may be provided at an upper outlet 14 of the slurry extrusion apparatus 100. For example, referring to FIG. 1, the slurry extrusion apparatus 100 may be configured such that the slurry is discharged upward of the slurry extrusion apparatus 100 to form a high back pressure at the bottom thereof.

For example, referring to FIG. 1, the outlet 14 may have a tubular or cylindrical shape (e.g., may have a rectangular cross-section). For example, the outlet 14 may extend (e.g., lengthwise) upward and perpendicularly relative to the barrel 12 and relative to the twin screws 13 (e.g., the outlet 14 may extend through the longitudinal sidewall of the barrel 12). As further illustrated in FIG. 1, the ultrasonic dispersion device 200 may be provided at the outlet 14 that is oriented upward (e.g., the outlet 14 extending upward and perpendicularly relative to the barrel 12 may be an upper outlet). Accordingly, the slurry extrusion apparatus 100 may efficiently control the degree of mixing and dispersion of slurries and increase the residence time of the slurries therein.

For example, as illustrated in FIG. 1, the slurry extrusion apparatus 100 may be a twin-screw extruder having two screws. In another example, the slurry extrusion apparatus 100 of the present disclosure may be configured to have one or three screws.

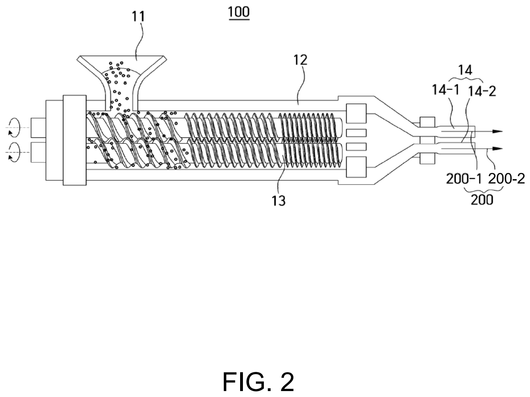

FIG. 2 is a view illustrating a slurry extrusion apparatus 100 according to another embodiment of the present disclosure. Referring to FIG. 2, the slurry extrusion apparatus 100 according to another embodiment of the present disclosure may include the ultrasonic dispersion device 200 in one piece.

For example, referring to FIG. 2, the outlet 14 may extend in parallel to the barrel 12 (e.g., in parallel to the longitudinal sidewall of the barrel 12 and to the twin screws 13). Further, the ultrasonic dispersion device 200 may be provided inside the barrel 12 or at the outlet 14 of the slurry extrusion apparatus 100 (e.g., the outlet 14 extending in parallel to the barrel 12 may be a parallel outlet).

As the ultrasonic dispersion device 200 is provided inside the barrel 12 or at the outlet 14 (e.g., at the parallel outlet) of the slurry extrusion apparatus 100, the slurry extrusion apparatus 100 may perform slurry control in a continuous process. As illustrated in the drawing, if the slurry extrusion apparatus 100 is an extrusion apparatus including twin screws 13, the slurry extrusion apparatus 100 may include two outlets 14 and two ultrasonic dispersion devices 200.

For example, a first outlet 14-1 may have a center positioned in a straight line with a center of a first screw of the twin screws 13, and a second outlet 14-2 may have a center positioned in a straight line with a center of a second screw of the twin screws 13. In addition, a first ultrasonic dispersion device 200-1 may have a center positioned in a straight line with the center of the first screw, and a second ultrasonic dispersion device 200-2 may have a center positioned in a straight line with the center of the second screw. As the ultrasonic dispersion device 200 is provided inside the barrel 12 or at the outlet 14 of the slurry extrusion apparatus 100 (e.g., at the parallel first and second outlets 14-1 and 14-2) and the center of the ultrasonic dispersion device 200 (e.g., the centers of the first and second ultrasonic dispersion devices 200-1 and 200-2) is positioned in a straight line with the center of the screws 13, respectively, the slurry extrusion apparatus 100 may control the flow rate and flow velocity of slurries to efficiently control the residence time of the slurries therein.

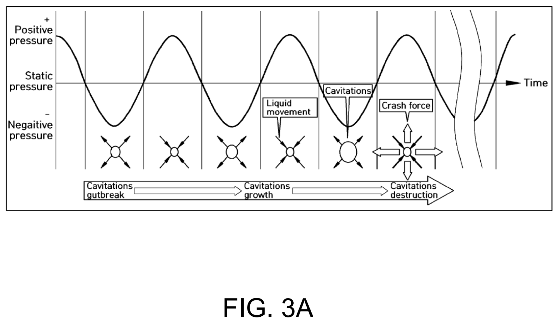

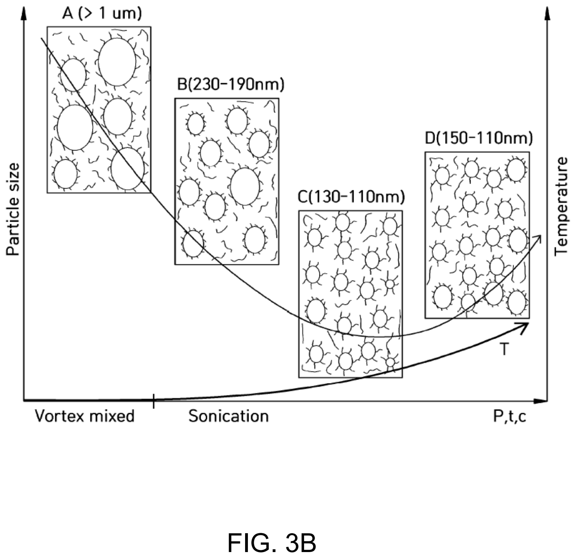

FIGS. 3A and 3B are diagrams for explaining a slurry dispersion method using ultrasonic waves according to an embodiment of the present disclosure.

Referring to FIGS. 3A and 3B, in the slurry dispersion method using ultrasonic waves according to the embodiment of the present disclosure, when a slurry is irradiated with ultrasonic waves, electrical energy is converted into vibration energy by inverse piezoelectric effects, in which case cavitation occurs through the repetition of strong compression and decompression forces. After the cavitation occurs, the energy and pressure resulting from cavitation bubbles are applied to the slurry, which affects the particle size and dispersibility of the slurry.

FIG. 3A is a diagram for explaining the principle of ultrasonic application, and FIG. 3B is a graph illustrating slurry particle size and particle distribution over ultrasonic amplitude, cycle, and propagation time. Referring to FIGS. 3A and 3B, the slurry extrusion apparatus 100 of the present disclosure is configured to allow the ultrasonic dispersion device 200 to irradiate the slurry with ultrasonic waves so that the above-mentioned cavitation occurs.

Hereinafter, the configuration and function of the ultrasonic dispersion device 200 according to the embodiment of the present disclosure will be described in detail.

FIG. 4 is a block diagram illustrating the ultrasonic dispersion device 200 according to an embodiment of the present disclosure.

Referring to FIG. 4, the ultrasonic dispersion device 200 according to an embodiment of the present disclosure may include a communication unit 210 (e.g., a communicator), an input unit 220 (e.g., an input), a display unit 230 (e.g., a display), a memory 240, a sensor unit 250 (e.g., a sensor), an ultrasonic unit 260 (e.g., an ultrasonic probe), a drive unit 270 (e.g., a driver), and a control unit 280 (e.g., a controller).

The communication unit 210 may communicate with a user or an administrator terminal over a network, and may communicate with a server that controls the slurry extrusion apparatus 100. For this purpose, the communication unit 210 may make use of, e.g., Internet communication such as 5th generation (5G), long term evolution-advanced (LTE-A), long term evolution (LTE), and/or wireless fidelity (Wi-Fi).

The input unit 220 generates input data in response to the input of an administrator that manages the slurry extrusion apparatus 100. In particular, the input unit 220 may receive different types of data on the operating conditions of the ultrasonic unit 260, operation control signals of the ultrasonic unit 260, etc., from the administrator. For this purpose, the input unit 220 may include, e.g., a key pad, a dome switch, a touch panel, a touch key, and/or a button.

The display unit 230 outputs output data in response to the operation of the slurry extrusion apparatus 100. In particular, the display unit 230 may display different types of data of a slurry in the slurry extrusion apparatus 100 measured by the sensor unit 250, a status of operation of the ultrasonic unit 260, and so on. For this purpose, the display unit 230 may include, e.g., a liquid crystal display (LCD), a light emitting diode (LED) display, an organic light emitting diode (OLED) display, a micro-electro mechanical system (MEMS) display, and/or an electronic paper display.

The memory 240 stores programs for operation of the ultrasonic unit 260. In particular, the memory 240 may store condition information regarding the operation of the ultrasonic unit 260, an algorithm for controlling the operation of the ultrasonic unit 260, etc., by the control unit 280.

The sensor unit 250 may measure status information of a slurry in the slurry extrusion apparatus 100. The status information of the slurry may include, e.g., a temperature, a pressure, a density, a viscosity, a homogeneity, a flow rate, a flow velocity, etc., of the slurry. The sensor unit 250 may measure the status information of the slurry through sensors installed in the slurry extrusion apparatus 100. For this purpose, the sensor unit 250 may include various sensors, e.g., a temperature sensor, a pressure sensor, a vibration sensor, a shock sensor, a flow rate sensor, and/or a flow velocity sensor.

The ultrasonic unit 260 may irradiate a slurry with ultrasonic waves. The ultrasonic unit 260 may include at least two probes, wherein a first probe may be provided on (e.g., directly on) the wall of the outlet 14 of the slurry extrusion apparatus 100, and a second probe may be provided on a column located at the center of the outlet 14 (hereinafter, referred to as an "outlet column") of the slurry extrusion apparatus 100. The ultrasonic unit 260 may repeatedly expose a slurry to ultrasonic waves, which are regular and strong stimuli, within a short period of time, thereby controlling the physical properties, dispersibility, and homogeneity of the slurry.

The drive unit 270 may control the movement of the ultrasonic unit 260 and the outlet 14. For example, the drive unit 270 may rotate the wall of the outlet 14 and the outlet column of the slurry extrusion apparatus 100, for which the drive unit 270 may include a motor.

The control unit 280 may control the communication unit 210, the input unit 220, the display unit 230, the memory 240, the sensor unit 250, the ultrasonic unit 260, and the drive unit 270. The control unit 280 may control the ultrasonic unit 260 to irradiate a slurry in the slurry extrusion apparatus 100 with ultrasonic waves.

The control unit 280 may use the status information of the slurry measured by the sensor unit 250 to set irradiation conditions including a time, an interval, an intensity, etc., of ultrasonic irradiation of the ultrasonic unit 260. The control unit 280 may control the ultrasonic unit 260 to irradiate the slurry with ultrasonic waves based on the set irradiation conditions.

As an example, the control unit 280 may cause ultrasonic irradiation under a preset first irradiation condition when the flow rate of the slurry is equal to or greater than a preset rate, and may cause ultrasonic irradiation under a preset second irradiation condition when the flow rate of the slurry is less than a preset rate. As another example, the control unit 280 may cause ultrasonic irradiation under a preset third irradiation condition when the flow velocity of the slurry is equal to or greater than a preset velocity, and may cause ultrasonic irradiation under a preset fourth irradiation condition when the flow velocity of the slurry is less than a preset velocity.

According to an implementation, the ultrasonic unit 260 may be a ceramic ultrasonic probe. As the ultrasonic unit 260 is a ceramic ultrasonic probe, it is possible to significantly reduce the rate of occurrence of foreign substances in the slurry.

According to an implementation, the ultrasonic dispersion device 200 may further include a coolant supply unit. The coolant supply unit may be configured to supply cooling water to the ultrasonic unit 260. As the cooling water is supplied to the ultrasonic unit 260, it is possible to ensure stability in relation to the temperature or load of the ultrasonic unit 260.

According to an implementation, the ultrasonic unit 260 may include multiple ultrasonic probes, and the multiple ultrasonic probes may be arranged in a multi-array in the slurry extrusion apparatus 100. This enables the effect of ultrasonic irradiation of the ultrasonic probes to be utilized fully and the residence time of slurries to be increased.

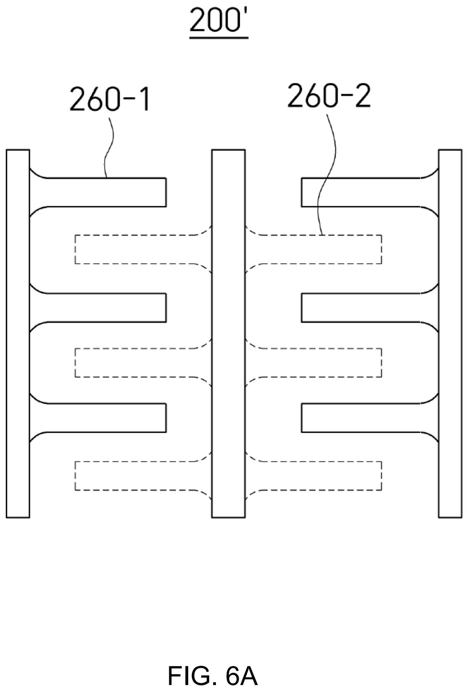

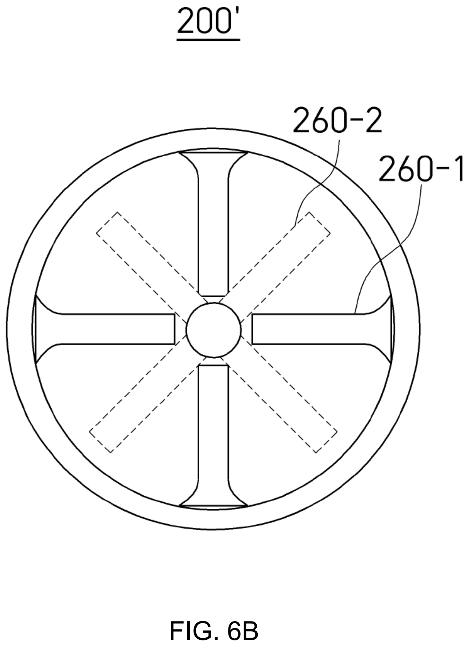

Hereinafter, the arrangement and operation of the ultrasonic unit 260 in the ultrasonic dispersion device 200 will be described in detail with reference to FIG. 6.

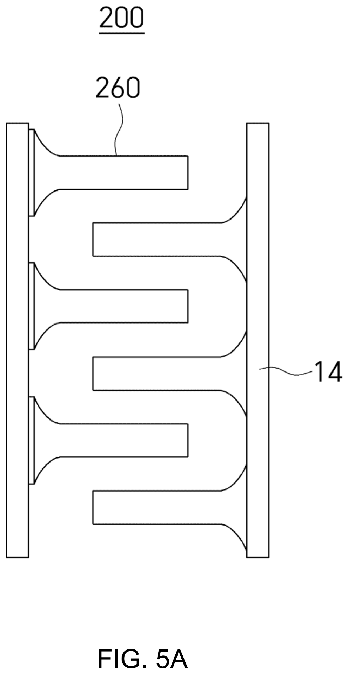

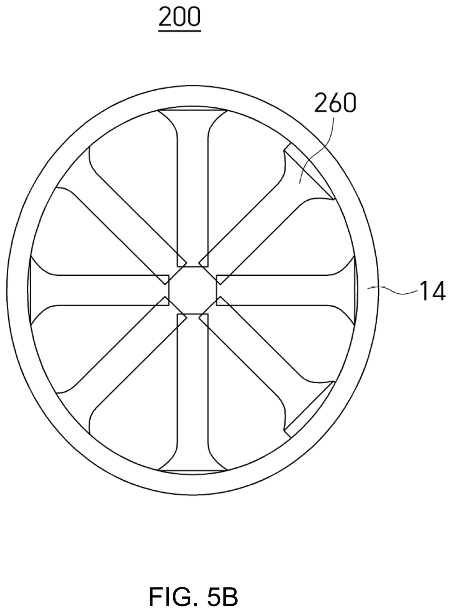

FIGS. 5A and 5B are views illustrating the ultrasonic dispersion device 200 according to an embodiment of the present disclosure. FIGS. 5A and 5B illustrate the arrangement of the ultrasonic unit 260 in the ultrasonic dispersion device 200 according to an embodiment of the present disclosure.

FIG. 5A is a side view of the arrangement of the ultrasonic unit 206, and FIG. 5B is a front view of the arrangement of the ultrasonic unit 260. In FIGS. 5A and 5B the ultrasonic unit 206 is illustrated as a plurality of ultrasonic probes.

For example, referring to FIGS. 5A and 5B, the ultrasonic probes of the ultrasonic unit 260 according to an embodiment of the present disclosure may be provided at the outlet 14 of the slurry extrusion apparatus 100. Although the outlet 14 of the slurry extrusion apparatus 100 illustrated in FIGS. 5A and 5B is cylindrical, which is only an example, the outlet 14 may have various shapes.

The ultrasonic probes of the ultrasonic unit 260 according to an embodiment of the present disclosure may be arranged in a zigzag pattern at regular intervals of distance along a slurry movement path on the side (e.g., on an inner sidewall) of the outlet 14 (FIG. 5A). In addition, the ultrasonic probes of the ultrasonic unit 260 may be arranged at regular intervals of distance or angle on the front (e.g., along an inner circumference) of the outlet 14 (FIG. 5B).

FIGS. 6A and 6B are views illustrating an ultrasonic dispersion device 200' according to another embodiment of the present disclosure. FIGS. 6A and 6B illustrate the arrangement of ultrasonic probes in the ultrasonic dispersion device 200' according to another embodiment of the present disclosure.

FIG. 6A is a side view of the arrangement of the ultrasonic probes of the ultrasonic unit 260, and FIG. 6B is a front view of the arrangement of the ultrasonic probes of the ultrasonic unit 260. In FIGS. 6A and 6B the ultrasonic unit 206 is illustrated as a plurality of ultrasonic probes.

Referring to FIGS. 6A and 6B, the ultrasonic probes of the ultrasonic unit 260 according to the second embodiment of the present disclosure may be provided at the outlet 14 of the slurry extrusion apparatus 100. Although the outlet 14 of the slurry extrusion apparatus 100 illustrated in FIGS. 6A and 6B is cylindrical, which is only an example, the outlet 14 may have various shapes.

The ultrasonic dispersion device 200' may include multiple ultrasonic probes, wherein a first ultrasonic probe 260-1 may be provided on the wall (e.g., an inner sidewall) of the outlet 14 of the slurry extrusion apparatus 100, and a second ultrasonic probe 260-2 may be provided on a column located at the center of the outlet 14 of the slurry extrusion apparatus 100. The first ultrasonic probe 260-1 and the second ultrasonic probe 260-2 may be arranged at regular intervals of distance along a slurry movement path on the side of the outlet 14. The first ultrasonic probe 260-1 and the second ultrasonic probe 260-2 may be arranged in a zigzag pattern so as not to overlap each other. In addition, the first ultrasonic probe 260-1 and the second ultrasonic probe 260-2 may be arranged in a zigzag pattern at regular intervals of distance or angle on the front of the outlet 14 so as not to overlap each other.

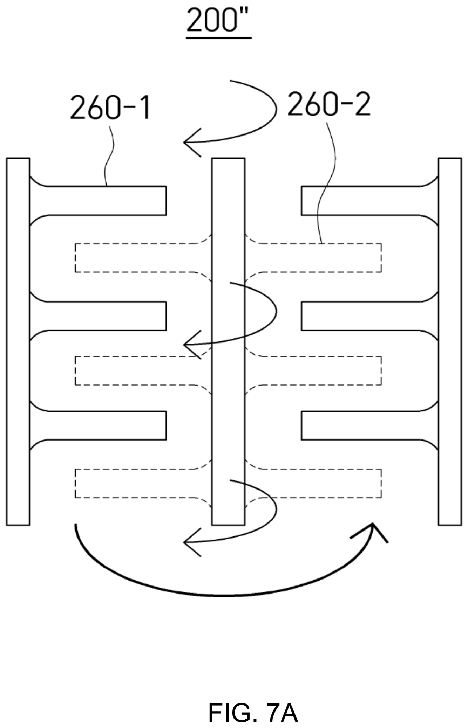

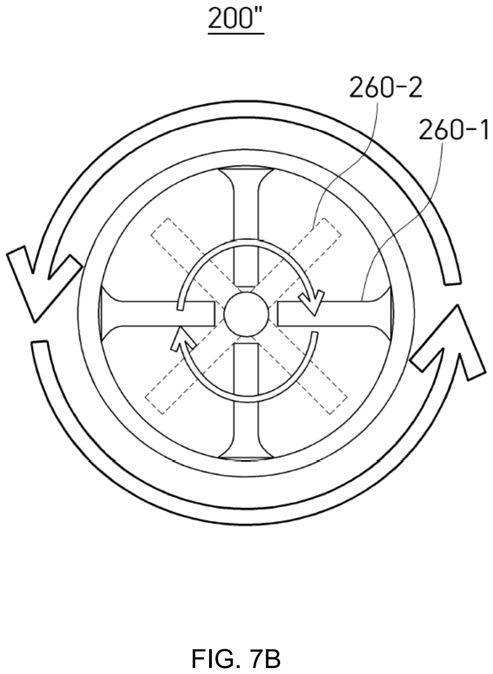

FIGS. 7A and 7B are views illustrating an ultrasonic dispersion device 200" according to still another embodiment of the present disclosure. FIGS. 7A and 7B illustrate the arrangement and movement of ultrasonic probes in the ultrasonic dispersion device 200" according to still another embodiment of the present disclosure.

FIG. 7A is a side view of the arrangement of the ultrasonic probes, and FIG. 7B is a front view of the arrangement of the ultrasonic probes. In FIGS. 7A and 7B the ultrasonic unit 206 is illustrated as a plurality of ultrasonic probes.

Referring to FIGS. 7A and 7B, the ultrasonic probes of the ultrasonic unit 206 may be provided at the outlet 14 of the slurry extrusion apparatus 100. Although the outlet 14 of the slurry extrusion apparatus 100 illustrated in FIGS. 7A and 7B is cylindrical, which is only an example, the outlet 14 may have various shapes.

The ultrasonic dispersion device 200" may include multiple ultrasonic probes, wherein the first ultrasonic probe 260-1 may be provided on the wall of the outlet 14 of the slurry extrusion apparatus 100, and the second ultrasonic probe 260-2 may be provided on a column located at the center of the outlet 14 of the slurry extrusion apparatus 100. Further, the wall of the outlet 14 where the first ultrasonic probe 260-1 is placed and the column located at the center of the outlet 14 where the second ultrasonic probe 260-2 is placed may be rotated in one direction.

The ultrasonic dispersion device 200" may control the drive unit 270 to rotate the outlet wall and the outlet column. The ultrasonic dispersion device 200" may use the status information of a slurry to control at least one of the outlet wall and the outlet column to be rotated.

As an example, the ultrasonic dispersion device 200" may control only one of the outlet wall and the outlet column to be rotated when the flow rate of the slurry is equal to or greater than a preset rate, and may control both the outlet wall and the outlet column to be rotated when the flow rate of the slurry is less than a preset rate. As another example, the ultrasonic dispersion device 200" may control only one of the outlet wall and the outlet column to be rotated when the flow velocity of the slurry is equal to or greater than a preset velocity, and may control both the outlet wall and the outlet column to be rotated when the flow velocity of the slurry is less than a preset velocity.

The ultrasonic dispersion device 200" may use the status information of the slurry to set a direction of rotation of the outlet wall and the outlet column. For example, the ultrasonic dispersion device 200" may control the outlet wall and the outlet column to be rotated in the same direction when the flow velocity or flow rate of the slurry is equal to or greater than a preset criterion, and may control the outlet wall and the outlet column to be rotated in different directions when the flow velocity or flow rate of the slurry is less than a preset criterion. If the ultrasonic dispersion device 200" controls the outlet wall and the outlet column to be rotated in different directions, the shear force and shear velocity applied to the slurry may be doubled compared to when the outlet wall and the outlet column are rotated in the same direction, thereby further ensuring the dispersibility of the slurry.

The ultrasonic dispersion device 200" may use the status information of the slurry to set a speed of rotation of the outlet wall and the outlet column. For example, the ultrasonic dispersion device 200" may control the outlet wall and the outlet column to be rotated at a preset first speed of rotation when the flow velocity or flow rate of the slurry is equal to or greater than a preset criterion, and may control the outlet wall and the outlet column to be rotated at a preset second speed of rotation when the flow velocity or flow rate of the slurry is less than a preset criterion.

As described above, the ultrasonic dispersion device 200" may use the status information of the slurry to set whether or not to rotate the outlet wall and the outlet column, the direction of rotation and speed of rotation of the outlet wall and the outlet column, and so on.

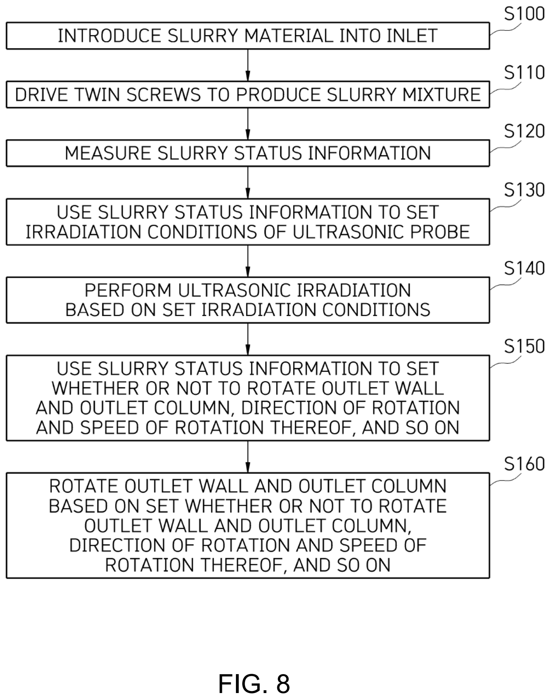

FIG. 8 is a flowchart illustrating a method of driving slurry extrusion apparatuses according to an embodiment of the present disclosure.

Referring to FIG. 8, the method of driving slurry extrusion apparatuses according to the embodiment of the present disclosure may include introducing a slurry material into an inlet of a slurry extrusion apparatus 100 (S100), driving twin screws to produce a slurry mixture by the slurry extrusion apparatus 100 (S110), measuring slurry status information by the ultrasonic dispersion device 200 (S120), using the slurry status information to set irradiation conditions including a time, an interval, an intensity, etc., of ultrasonic irradiation of an ultrasonic unit by the ultrasonic dispersion device 200 (S130), controlling the ultrasonic unit (e.g., ultrasonic probes) to irradiate slurries with ultrasonic waves based on the set irradiation conditions by the ultrasonic dispersion device 200 (S140), using the slurry status information to set whether or not to rotate an outlet wall and an outlet column, a direction of rotation and speed of rotation thereof, and so on by the ultrasonic dispersion device 200 (S150), and controlling a drive unit to rotate the outlet wall and the outlet column based on the set whether or not to rotate the outlet wall and the outlet column, the direction of rotation and speed of rotation thereof, and so on by the ultrasonic dispersion device 200 (S160).

The method of driving slurry extrusion apparatuses according to the embodiment of the present disclosure has been described above with reference to the flowchart presented in the drawing. For the purposes of simplicity, the method has been illustrated and described as a series of blocks, but the order of the blocks may be varied. For example, some blocks may occur in a different order or concurrently with other blocks than illustrated and described herein, and various different branches, flow paths, and sequences of blocks may be implemented that achieve the same or similar results. Furthermore, all of the blocks illustrated may not be required to implement the method described herein.

Meanwhile, in the description with reference to FIG. 8, each of S100 through S160 may be further divided into additional steps, operations, or stages, or combined into fewer steps, operations or stages depending on the implementation of the present disclosure. Additionally, if necessary, some steps, operations or stages may be omitted or the order may be changed. Moreover, even if there are any other omitted, the contents of FIGS. 1 to 7B may be applied to the contents of FIG. 8. On the other hands, the contents of FIG. 8 may be applied to the contents of FIGS. 1 to 7B.

Hereinafter, materials which may be used in a slurry mixed in the slurry extrusion apparatus according to an embodiment of the present disclosure are described.

A compound (e.g., a lithiated intercalation compound) capable of reversible intercalation and deintercalation of lithium may be used as a positive electrode active material. Specifically, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel oxide, lithium cobalt oxide, lithium manganese oxide, a lithium ferrous phosphate compound, cobalt-free nickel-manganese oxide, or a combination of them.

For example, a compound that is represented as one of the following chemical formulas may be used. LiₐA_{1-b}X_{b}O_{2-c}D'_{c} (0.90≤a≤1.8, 0≤b≤0.5, 0≤c≤0.05); LiₐMn_{2-b}X_{b}O_{4-c}D'_{c} (0.90≤a≤1.8, 0≤b≤0.5, 0≤c≤0.05); LiₐNi_{1-b-c}Co_{b}X_{c}O_{2-α}D'_{α} (0.90≤a≤1.8, 0≤b≤0.5, 0≤c≤0.5, 0<α<2); LiₐNi_{1-b-c}Mn_{b}X_{c}O_{2-α}D'_{α}(0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D' may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material, and may further include a binder and/or a conductive material.

Content of the positive electrode active material may be 90 wt.% to 99.5 wt.% with respect to 100 wt.% of the positive electrode active material layer. Content of the binder and the conductive material may be 0.5 wt.% to 5 wt.% with respect to 100 wt.% of the positive electrode active material layer.

Al may be used as the current collector.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversible intercalation/de-intercalation with respect to lithium ions may include a carbon negative electrode active material, e.g., crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si negative electrode active material or an Sn negative electrode active material may be used as the material capable of doping and dedoping with respect to lithium. The Si negative electrode active material may be silicon, a silicon-carbon composite, SiOₓ (0<x<2), a Si alloy, or a combination of them.

The silicon-carbon composite may be a composite of silicon and amorphous carbon. According to an implementation example, the silicon-carbon composite may include silicon particles, and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example, the negative electrode active material layer may include the negative electrode active material in an amount of 90 wt.% to 99 wt.%, the binder in an amount of 0.5 wt.% to 5 wt.%, and the conductive material in an amount of 0 wt.% to 5 wt.%, with respect to 100 wt.% of the negative electrode active material layer.

A nonaqueous binder, an aqueous binder, a dry binder, or a combination of them may be used as the binder. If the aqueous binder is used as a binder for the negative electrode, the binder for the negative electrode may further include a cellulose-series compound capable of assigning viscosity.

One selected among nickel foil, stainless steel foil, titanium foil, nickel foam, copper foam, a polymer base on which a conductive metal has been coated, and a combination of them may be used as a current collector for the negative electrode.

As is apparent from the above description, according to the embodiments of the present disclosure, there is provided the ultrasonic dispersion device configured to form the multi-ultrasonic dispersion zone inside or at the outlet of the slurry extrusion apparatus. Therefore, it is possible to repeatedly expose slurries to ultrasonic waves, which are regular and strong stimuli, within a short period of time, and thus to efficiently control the physical properties, dispersibility, and homogeneity of the slurries.

According to the embodiments of the present disclosure, it is possible to control the particle sizes and distribution of the slurries by maximizing slurry cavitation through ultrasonic waves, and thus to ensure that physical properties of the slurries are optimized for processes after discharge thereof.

According to the embodiments of the present disclosure, since it is configured such that the slurries are discharged upward of the slurry extrusion apparatus to form a high back pressure at the bottom thereof, it is possible to efficiently control the degree of mixing and dispersion of the slurries and increase the residence time of the slurries.

According to the embodiments of the present disclosure, it is possible to mix the slurries by means of ultrasonic waves to allow for uniform mixing and homogenization of the slurries compared to existing mechanical slurry mixing, and to maintain the slurries in an even phase for a long period of time even in the degassing process.

According to the embodiments of the present disclosure, it is possible to increase the residence time of the slurries by arranging the multiple probes in the ultrasonic dispersion device.

According to the embodiments of the present disclosure, since the ultrasonic dispersion device is provided with the ceramic probe and the cooling water, it is possible to significantly reduce the rate of occurrence of foreign substances in the slurries and ensure stability in relation to the temperature or load of the ultrasonic dispersion device.

By way of summation and review, a twin-screw extruder may be limited in slurry quality control due to a very short residence time of the slurries in the extruder. To compensate, an additional process of dispersing and homogenizing slurries after discharge thereof from the extruder may be required, but the additional process may interrupt the continuous processes in the extruder. Hence, there is a desire to introduce continuous processes of dispersion and homogenization that enable high production and high speed to be maintained in extruders.

The present disclosure provides an ultrasonic dispersion device capable of irradiating an in-extruder slurry with ultrasonic waves to control physical properties, dispersibility, and homogeneity of the slurry, and a slurry extrusion apparatus including the same. That is, in accordance with an aspect of the present disclosure, there is provided a slurry extrusion apparatus that includes an inlet for introducing a slurry material therethrough, a barrel, which is a region where a slurry moves, at least one screw configured to apply a mechanical shear force to the slurry by rotation thereof, an outlet for extruding the slurry therethrough, and an ultrasonic dispersion device including multiple ultrasonic probes placed at the outlet to irradiate the slurry with ultrasonic waves, and a control unit configured to control ultrasonic irradiation of the ultrasonic probes, wherein the outlet is an upper outlet or a parallel outlet.

However, aspects and features of the present disclosure are not limited to those described above, and other aspects and features not mentioned will be clearly understood by a person skilled in the art from the detailed description, described above.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An ultrasonic dispersion device in a slurry extrusion apparatus, the ultrasonic dispersion device comprising:
ultrasonic probes in an outlet of the slurry extrusion apparatus, the ultrasonic probes being configured to irradiate a slurry in the slurry extrusion apparatus with ultrasonic waves; and
a controller configured to control the ultrasonic waves of the ultrasonic probes.

2. The ultrasonic dispersion device as claimed in claim 1, wherein the ultrasonic probes are arranged in a zigzag pattern at regular intervals on a side of the outlet along a path of movement of the slurry, the ultrasonic probes being arranged at regular intervals or angles on a front of the outlet.

3. The ultrasonic dispersion device as claimed in claim 1 or claim 2, wherein the ultrasonic probes include first ultrasonic probes on the side of the outlet and second ultrasonic probes on a column of the outlet, the column extending through a center of the outlet.

4. The ultrasonic dispersion device as claimed in claim 3, wherein:
the first ultrasonic probes are arranged in a zigzag pattern at regular intervals on the side of the outlet along a path of movement of the slurry so as not to overlap each other, and
the second ultrasonic probes are arranged in a zigzag pattern at regular intervals or angles on a front of the outlet so as not to overlap each other.

5. The ultrasonic dispersion device as claimed in claim 3 or claim 4, further comprising a driver configured to rotate the side of the outlet and the column of the outlet, the controller being configured to control the driver to rotate at least one of the side of the outlet and the column of the outlet; and, optionally,
further comprising a sensor configured to measure a slurry status information including at least one of a temperature, a pressure, a density, a viscosity, a homogeneity, a flow rate, and a flow velocity of the slurry, the controller being configured to use the slurry status information to set at least one of whether to rotate the outlet, a direction of rotation thereof, and a speed of rotation thereof.

6. The ultrasonic dispersion device as claimed in any preceding claim,
(A) further comprising a sensor configured to measure a slurry status information including at least one of a temperature, a pressure, a density, a viscosity, a homogeneity, a flow rate, and a flow velocity of the slurry, the controller being configured to use the slurry status information to set an irradiation condition including at least one of a time, an interval, and an intensity of ultrasonic irradiation of the ultrasonic probes;
and/or
(B) wherein the ultrasonic probes are ceramic probes.

7. The ultrasonic dispersion device as claimed in any preceding claim,
(A) further comprising a coolant supply unit configured to supply cooling water to the ultrasonic probes;
and/or
(B) wherein the ultrasonic dispersion device has a center positioned in a straight line with a center of a screw in the slurry extrusion apparatus.

8. A slurry extrusion apparatus, comprising:
an inlet configured to introduce a slurry material therethrough;
a barrel connected to the inlet, the slurry material being configured to move through the barrel;
at least one screw in the barrel, the screw being configured to rotate and to apply a mechanical shear force to the slurry material in the barrel;
an outlet connected to the barrel, the outlet being an upper outlet or a parallel outlet, and the outlet being configured to extrude the slurry material from the barrel; and
an ultrasonic dispersion device in the outlet, the ultrasonic dispersion device including ultrasonic probes and a controller, the ultrasonic probes being configured to irradiate the slurry material with ultrasonic waves, and the controller being configured to control ultrasonic irradiation of the ultrasonic probes.

9. The slurry extrusion apparatus as claimed in claim 8, wherein the ultrasonic probes are arranged in a zigzag pattern at regular intervals on a side of the outlet along a path of movement of the slurry material, the ultrasonic probes being arranged at regular intervals or angles on a front of the outlet.

10. The slurry extrusion apparatus as claimed in claim 8 or claim 9, wherein the ultrasonic probes include first ultrasonic probes on the side of the outlet and second ultrasonic probes on a column of the outlet, the column extending through a center of the outlet.

11. The slurry extrusion apparatus as claimed in claim 10, wherein:
the first ultrasonic probes are arranged in a zigzag pattern at regular intervals on the side of the outlet along a path of movement of the slurry material so as not to overlap each other, and
the second ultrasonic probes are arranged in a zigzag pattern at regular intervals or angles on a front of the outlet so as not to overlap each other.

12. The slurry extrusion apparatus as claimed in claim 10 or claim 11, wherein the ultrasonic dispersion device further comprises a driver configured to rotate the side of the outlet and the column of the outlet, the controller being configured to control the driver to rotate at least one of the side of the outlet and the column of the outlet; and, optionally,
wherein the ultrasonic dispersion device further comprises a sensor configured to measure a slurry status information including at least one of a temperature, a pressure, a density, a viscosity, a homogeneity, a flow rate, and a flow velocity of the slurry material, the controller being configured to use the slurry status information to set at least one of whether to rotate the outlet, a direction of rotation thereof, and a speed of rotation thereof.

13. The slurry extrusion apparatus as claimed in any of claims 8 to 12,
(A) wherein the ultrasonic dispersion device further comprises a sensor configured to measure a slurry status information including at least one of a temperature, a pressure, a density, a viscosity, a homogeneity, a flow rate, and a flow velocity of the slurry material, the controller being configured to use the slurry status information to set an irradiation condition including at least one of a time, an interval, and an intensity of ultrasonic irradiation of the ultrasonic probes;
and/or
(B) wherein the ultrasonic probes are ceramic probes.

14. The slurry extrusion apparatus as claimed in any of claims 8 to 13,
(A) wherein the ultrasonic dispersion device further includes a coolant supply unit configured to supply cooling water to the ultrasonic probes;
and/or
(B) wherein the outlet has a center positioned in a straight line with a center of the screw.
